# EUROPÄISCHE PATENTSCHRIFT

(11) **EP 2 659 008 B1**
(45) Veröffentlichungstag und Bekanntmachung des Hinweises auf die Patenterteilung: **11.03.2015**
(21) Anmeldenummer: 11813877.5
(22) Anmeldetag: 28.12.2011
(51) Int. Cl.: C21C 5/46, C21C 5/52, F27D 3/16, F27D 99/00

(54) **VERFAHREN ZUR PYROMETALLURGISCHEN BEHANDLUNG VON METALLEN, METALLSCHMELZEN UND/ ODER SCHLACKEN**
METHOD FOR THE PYROMETALLURIGICAL TREATMENT OF METALS, MOLTEN METALS, AND/OR SLAGS
PROCÉDÉ DE TRAITEMENT PYROMÉTALLURGIQUE DE MÉTAUX, DE MÉTAUX EN FUSION ET/OU DE SCORIES

(30) Priorität: 29.12.2010 DE 102010064357
(43) Veröffentlichungstag der Anmeldung: 06.11.2013
(73) Patentinhaber: SMS Siemag AG, 40237 Düsseldorf (DE)
(72) Erfinder: SCHUBERT, Manfred, 46147 Oberhausen (DE); MEYN, Matthias, 41468 Neuss (DE)
(74) Vertreter: Klüppel, Walter
(86) Internationale Anmeldenummer: PCT/EP2011/074128
(87) Internationale Veröffentlichungsnummer: WO 2012/089754

(56) Entgegenhaltungen:
- EP-A1- 0 848 795
- EP-A1- 0 866 138
- EP-A1- 1 179 602
- WO-A1-00/12767
- DE-A1- 10 201 108
- US-A- 5 904 895

## Beschreibung

Die Erfindung bezieht sich auf ein Verfahren zur pyrometallurgischen Behandlung von Metallen, Metallschmelzen und/oder Schlacken in einem metallurgischen Aggregat oder Schmelzgefäß, insbesondere in einem Lichtbogenofen, insbesondere zum Auf- oder Einblasen sauerstoffreicher Gase mit Hilfe einer Injektorvorrichtung, die in ihrer Betriebsweise als Injektor die sauerstoffhaltigen Gase beschleunigt und zu einem Hochgeschwindigkeitsstrahl mit einem diesen vollständig umhüllenden gasförmigen Mantel formt.

Es ist bekannt, Injektorvorrichtungen zum Auf- oder Einblasen sauerstoffreicher Gase, insbesondere unter Zusatz kohlenstoffhaltiger Stoffe, in einem Elektrolichtbogenofen zu nutzen. Die Injektorvorrichtung beschleunigt die sauerstoffreichen Gase auf Überschallgeschwindigkeit. Fallweise werden den sauerstoffreichen Gasen Kohlenstoffpartikel zugemischt. Es wird ein Hochgeschwindigkeitsstrahl dieser Gase zur pyrometallurgischen Behandlung erzeugt, der durch einen diesen umgebenden gasförmigen Mantel geschützt wird. Die Injektorvorrichtungen kommen in industriellen Anlagen, insbesondere in Elektrolichtbogenöfen zum Auf- oder Einblasen von sauerstoffreichen Gasen und/oder kohlenstoffreichen Partikeln in und/oder auf eine Schlacken- oder Schlackenschaumschicht zum Schäumen der Schlacke zum Einsatz. Die sauerstoffreichen Gase werden in und/oder auf die unterhalb der Schlacken- oder Schaumschlackenschicht befindliche Metallschmelze eingebracht, um dieser den Kohlenstoff zu entziehen, d. h. zur Entkohlung der Metallschmelze.

Das Einschmelzen fester Einsatzstoffe wie beispielsweise Schrott oder Eisenschwamm in Elektrolichtbogenöfen erfordert einen hohen Energieeinsatz; dieser liegt zwischen 550 und 750 kWh je Tonne Rohstahl. Zur Senkung des Elektroenergiebedarfs wird zusätzlich chemische Energie, insbesondere in Form von Erdgas oder Kohle, eingesetzt. Zur Gewährleistung hoher Reaktionstemperaturen erfolgt deren Verbrennung zumeist mit technisch reinem Sauerstoff. Hierdurch wird gleichzeitig die zu behandelnde spezifische Abgasmenge gegenüber der Verwendung von Luft deutlich verringert. Während bestimmter Phasen des Schmelzprozesses erfolgt das Einblasen von Sauerstoff und/oder von Primärenergieträgern, beispielsweise von Erdgas, zur Unterstützung oder Beschleunigung der Schrotterwärmung und der Schrottniederschmelzung. Die Reaktion erfolgt oberhalb der Schmelze, bevorzugt in direktem Kontakt mit dem einzuschmelzenden Feststoff. Die Zugabe des Erdgases und des Sauerstoffs erfolgt dabei nach dem Stand der Technik über spezielle Brenner in der Ofenwand oder mittels gekühlter Lanzen.

Eine weitere Phase bei der pyrometallurgischen Behandlung ist die Schaumschlackenphase. Die Schaumschlacke soll die Ofenwände während der Flachbadphase gegen die Lichtbogenstrahlung abschirmen, um Überhitzungen der Wandbereiche zu vermeiden, die elektrische Leistungsabnahme des Lichtbogens zu vergleichmäßigen und durch Verminderung der Strahlungsverluste insgesamt eine hohe Energieeffizienz zu ermöglichen. Zur Bildung von Schaumschlacken werden gleichzeitig feinkörnige Kohlenstoffträger und Sauerstoff bevorzugt in die Grenzschicht zwischen Schlacke und Metall eingeblasen.

Die Zugabe eines Kohlenstoffträgers erfolgt vorzugsweise in den Bereich zwischen der Metallschmelze und der Schlacke, teilweise auch unter die Oberfläche der Metallschmelze. Als Trägergas werden bevorzugt Pressluft, Stickstoff oder auch gasförmige Kohlenwasserstoffe eingesetzt.

Das Eindüsen von Sauerstoff erfolgt vorzugsweise in den Bereich der Grenzschicht zwischen der Metallschmelze und der Schlacke zur partiellen Oxidation des eingedüsten Kohlenstoffs sowie zur Entkohlung der Metallschmelze. Bei der partiellen Oxidation des in dem Kohlenstoffträger enthaltenen Kohlenstoffs entsteht gasförmiges Kohlenmonoxid, das aus der Schlacke in Form von Gasblasen entweicht. Dies bewirkt ein Aufschäumen der Schlacke. Die Schaumschlacke verbessert die Energieausnutzung und verringert die Belastung der feuerfesten Ausmauerung des Elektrolichtbogenofens. Das Kohlenmonoxid kann durch externe Zugaben weiterer Oxidantien intern oder extern nachverbrannt werden. Die Zugabe von Kohlenstoffträgern, Sauerstoff und weiteren Oxidantien erfolgt kombiniert oder getrennt über spezielle Injektor- oder Düsenvorrichtungen in der Ofenwand, über gekühlte Lanzen durch die Tür, die Ofenwand oder den Deckel des Ofens, über ungekühlte Lanzen durch die Tür, die Ofenwand oder den Deckel oder aber über Unterbaddüsensysteme.

Bei der Gas- oder Feststoffeindüsung über gemeinsame Injektorvorrichtungen müssen die oben genannten Funktionalitäten in einer Einheit integriert werden. Die während der einzelnen Prozessschritte einzudüsenden Komponenten stellen unterschiedliche und teilweise einander widersprechende Anforderungen an das zugehörige Injektorsystem, d. h. an die Strömungsgeschwindigkeit, den Ort der Eindüsung, das Mischungs- und Ausbrandverhalten und den Eintrag in die Schmelze dar. Daher haben die Einheiten entweder sehr große Dimensionen oder es müssen Kompromisslösungen gefunden werden.

Aus der EP 0 964 065 A1 ist eine aus zwei Bauteilen bestehende Injektorvorrichtung bekannt, bei der ein Bauteil als Überschallsauerstoffinjektor und der andere als Kohlenstoffinjektor eingesetzt wird. Die Achsen der beiden Bauteile sind so ausgerichtet, dass sich die beiden erzeugten Strahlen oberhalb des Badspiegels schneiden. Um eine weitgehende Fokussierung des jeweils zentralen Sauerstoff- oder Kohlenstrahls zu gewährleisten, werden diese mit einem Erdgasstrahl umhüllt, der aus einem um die zentrale Düsenöffnung konzentrisch angeordneten Düsenring austritt.

In der US 5 904 895 wird eine wassergekühlte Injektorvorrichtung beschrieben, die eine Verbrennungskammer zur Erzeugung einer Hochgeschwindigkeitsflamme zum Niederschmelzen der vor der Verbrennungskammer befindlichen Feststoffe aufweist. Mit fortschreitender Einschmelzdauer können feindisperse Feststoffe, beispielsweise Kohle, sowie zusätzlicher Sauerstoff mit Hochgeschwindigkeit in den Elektrolichtbogenofen eingebracht werden, wobei der Feststoff dem bereits beschleunigten Sauerstoffstrahl von der Seite zugemischt wird. Hierbei wird sowohl der Feststoffstrahl als auch der Hochgeschwindigkeitsstrahl durch einen sie umgebenden Flammenmantel geschützt.

In der EP 0 866 138 A1 wird eine Methode zum Eindüsen von Gasen, beispielsweise von Sauerstoff und Erdgas, in eine Schmelze beschrieben. Hierbei wird der zentral aus einem Injektor austretende Sauerstoff mit einer Lavaldüse auf Überschallgeschwindigkeit beschleunigt. Damit der Strahl seinen Austrittsimpuls möglichst lange aufrecht erhält, wird er durch einen ihn vollständig umhüllenden Flammenmantel geschützt. Der Flammenmantel entsteht bei der Verbrennung des aus einem zu der Lavaldüse konzentrischen Ringspalt oder Düsenring austretenden Erdgases mit Sauerstoff. Der Sauerstoff wird über einen außerhalb des Erdgasrings konzentrisch angeordneten zweiten Ringspalt oder Düsenring geführt.

Aus der EP 1 092 785 A1 ist eine Injektorvorrichtung bekannt, die nach dem Prinzip der aus der EP 0 866 138 A1 bekannten Injektorvorrichtung arbeitet und zusätzlich noch die Eindüsung partikelförmiger Feststoffe erlaubt. Die Zugabe des Feststoffes erfolgt dabei ebenso wie die Sauerstoffzugabe innerhalb des Flammenmantels.

Die EP 1 179 602 A1 beschreibt eine Injektor-Vorrichtung in einem Lichtbogenofen.

In der WO 2000/12767 ist ein Verfahren und eine Vorrichtung zum Herstellen einer Metallschmelze unter Verwendung einer Multifunktionslanze bekannt.

Die EP 0 848 795 A1 beschreibt ein Verfahren zur Verbrennung von Brennstoff sowie einen dazugehörigen Brenner. Als Brennstoffe werden sowohl Erdgas als auch partikelförmige Brennstoffe als Feststoffe verwendet. Hierbei werden in einen zylinderförmigen oder sich schwach kegelförmig in Strahlrichtung erweiternden Sauerstoff-Hauptstrahl mehrere schief zur zentralen Längsachse gerichtete Erdgasstrahlen geblasen. Der Hauptstrahl wird durch eine Lavaldüse auf Überschallgeschwindigkeit beschleunigt. Die Brennstoffstrahlen umgeben den Hauptstrahl und dringen erst stromabwärts in diesen ein. Im Inneren des Hauptstrahls wird durch ein Zentralrohr ein zweiter Brennstoffstrahl gebildet, mit dem Erdgas oder ein Feststoff in den Hauptstrahl nach dessen Beschleunigung eingedüst wird.

Um bei Injektorvorrichtungen die Ausweitung der Strahlen möglichst auf einer längeren Wegstrecke zu unterdrücken, werden die erzeugten Strahlen vielfach mit einem Flammenmantel umgeben, der üblicherweise durch Verbrennung von Erdgas erzeugt wird. Der Flammenmantel bewirkt den Nachteil eines unerwünschten Impulsverlustes des zentralen Gasstrahls, da die Strömungsgeschwindigkeiten der Mantelstrahlen wesentlich geringer als die des zentralen Gasstrahls sind. Außerdem erfordert diese Maßnahme einen zusätzlichen Stoffeinsatz und damit höhere Energiekosten. Dieses ist aus prozesstechnischer Sicht weitgehend unnötig und streckenweise auch ineffektiv.

Aus der DE 102 01 108 A1 ist eine Injektorvorrichtung bekannt, durch die sich die Menge eines frei in den Innenraum eines metallurgischen Apparats ausströmenden sauerstoffreichen Gases und seine Eindringtiefe in eine vorhandene Schlackenschicht vergrößern. Gemäß der DE 102 01 108 A1 wird ein Verfahren zur pyrometallurgischen Behandlung geschaffen, bei dem der gasförmige Mantel ein Heißgas ist, das dem zentralen Hochgeschwindigkeitsstrahl so zugeführt wird, dass die Relativgeschwindigkeit und der Impulsaustausch zwischen dem zentralen Hochgeschwindigkeitsstrahl und dem Heißgasmantelstrahl durch eine wenigstens nahezu isokinetische Zuführung minimiert wird. Hierbei werden die Nachteile des Standes der Technik für den gemeinsamen Einsatz von Sauerstoff und einem Feststoff bei unterschiedlichen Betriebszuständen vermieden, nämlich ein hoher spezifischer Energieeinsatz und die Notwendigkeit von Manipulationen oder mehreren Öffnungen im metallurgischen Apparat sowie ein komplizierter Aufbau.

Um die Länge des Gasstrahls und seine Eindringtiefe in die oberhalb der Metallschmelze befindliche Schlackenschicht zur Erzeugung einer intensiven Durchmischung und Bewegung sowie zur Verbesserung der Eindüsung partikelförmiger Feststoffe, beispielsweise von Kohlenstoffträgern, Stäuben oder Zuschlagsstoffen, auszunutzen, wird der zentrale Gasstrahl über einen Sauerstoffinjektor, d. h. ein längeres Rohr mit einer Lavaldüse, geführt und auf eine Geschwindigkeit zwischen 300 bis 850 m/s beschleunigt und im Gegensatz zu den bekannten Lösungen mit einem Mantelstrahl aus Heißgas umhüllt. Das Heißgas wird dabei entweder durch eine externe Verbrennung in einem Heißgaserzeuger, beispielsweise von Erdgas mit Luft in einem handelsüblichen Hochgeschwindigkeitsbrenner, oder durch Rezirkulation heißer Ofengase mittels eines separaten Hochtemperaturverdichters, oder durch eine Kombination beider Maßnahmen bereitgestellt.

Sofern die Heißgaserzeugung durch externe Reaktion eines Brennstoffes mit einem Oxidator erfolgt, wird hierzu ein Oxidator mit Sauerstoffgehalten von 10 bis 100 Volumenprozent, vorzugsweise von 21 Volumenprozent, verwendet. Der Oxidationsvorgang wird in jedem Fall stöchiometrisch betrieben. Die Luftzahl im Heißgaserzeuger wird zwischen 1,05 und 2,0, vorzugsweise zwischen 1,3 und 1,5, eingestellt. Der Oxidator kann auf Temperaturen zwischen 50°C und 600°C vorgewärmt werden, vorzugsweise zwischen 200°C und 400°C. Die Vorwärmung kann extern oder innerhalb der Injektorvorrichtung erfolgen. Vorzugsweise wird die Vorwärmung des Oxidators in das Kühlsystem der Injektorvorrichtung integriert oder ist ein wesentlicher Bestandteil des Kühlsystems.

Die Temperatur des Heißgases beträgt bei Eintritt in den Injektorbrenner zwischen 300°C und 1800°C. In diesem Temperaturbereich ist die Schallgeschwindigkeit des Heißgases infolge der zugrundeliegenden thermodynamischen Zusammenhänge wesentlich höher als die des kalten Zentralstrahls. Damit wird die Austrittsgeschwindigkeit des Heißgases bereits mit einer einfachen Düse In den Bereich der Strömungsgeschwindigkeit des Zentralstrahls angehoben,

Es ist die Aufgabe der vorliegenden Erfindung, den Nutzen der bekannten Injektorvorrichtung zu erweitern.

Erfindungsgemäß wird diese Aufgabe bei einem Verfahren der eingangs genannten Art dadurch gelöst, dass die Injektorvorrichtung alternativ von einem Brennerbetrieb auf einen Injektorbetrieb umschaltbar ist.

Vorteilhafte Ausgestaltungen der Erfindung sind in dem abhängigen Ansprüchen definiert.

Durch die beanspruchte Verwendung der Injektorvorrichtung erhält diese einen zweifachen Einsatzzweck und lässt sich als Brennersystem in einem metallurgischen Gefäß, insbesondere in einem Lichtbogenschmelzofen, mit einem gegenüber herkömmlichen Brennern deutlich reduzierten Wartungsaufwand und einer hohen Energieeffizienz einsetzen.

Brennersysteme nach dem Stand der Technik haben eine hohe Neigung zu Verstopfungen durch Stahl- und Schlackespritzer. Um die Gefahr der Verstopfung zu reduzieren, ist es erforderlich, die Systeme mit großem Abstand zur der Oberfläche der Schmelze einzubauen. Hierdurch wird jedoch die Höhe der Schrottsäule oberhalb der Schmelze in dem metallurgischen Gefäß eingeschränkt,
was zu einem schlechten Wärmeeintrag In den Schrott führt. Darüber hinaus müssen die Brenner frühzeitig abgeschaltet werden, weil durch das Einschmelzen des Schrotts ihre Mündung frei wird und somit das heiße Gas direkt von der Ofenabsaugung erfasst wird.

Um bei Brennern nach dem Stand der Technik die Gas- und Sauerstofföffnungen möglichst frei zu halten, werden die Austrittsöffnungen bei abgeschaltetem Brenner mit Druckluft beaufschlagt. Die Druckluft hat allerdings durch ihre kühlende Wirkung einen negativen Effekt auf den Ofenbetrieb. Ebenfalls können sogenannte Pilotflammen, die allerdings erst ofenseitig vor den Austrittsöffnungen zünden und einen relativ hohen Gas- und Sauerstoffverbrauch verursachen, einen störenden Einfluss haben.

Durch ihre starke Neigung zu Verstopfungen müssen die Brenner nach dem Stand der Technik regelmäßig gewartet und repariert werden. Trotzdem lässt sich ein gelegentlicher Ausfall nicht sicher vermeiden. Hierdurch kommt es zu Produktionseinbußen. Die Beaufschlagung der Austrittsöffnungen bei abgeschaltetem Brennerbetrieb verursacht hohe Betriebskosten.

Durch die Erfindung wird demgegenüber die Verstopfungsgefahr durch Festsetzen von Schlacke vermieden; es lässt sich ein geringer Abstand des Injektors zur Schmelze einstellen, was eine hohe Wirksamkeit bedeutet. Dadurch lässt sich auch eine im Vergleich zu Brennern nach dem Stand der Technik viel bessere Energieeffizienz erzielen, wodurch die Betriebskosten sinken und die Produktion gesteigert wird.

Die als Brenner eingesetzte Injektor-Vorrichtung verfügt über eine zentrale Düse für Sauerstoff. Diese Düse wird von einem Ringspalt umgeben, durch den im Brennerbetrieb ein für die Verbrennung notwendiges Gas zugeführt wird. Durch die Tatsache, dass die für die Gasdüse und den Ringspalt benötigte Querschnittsfläche sehr klein ist, wird diese durch die Flamme zuverlässig gegen Verstopfungen durch Stahl- und Schlackespritzer abgesichert. Bei abgeschaltetem Brennerbetrieb wird dem Ringspalt vorzugsweise von einem zusätzlichen Hilfsbrenner heiße Verbrennungsluft zugeführt, welche den Ringspalt mit sehr hoher Geschwindigkeit durchströmt und damit die Injektor-Vorrichtung oder den Brenner sicher gegen das Eindringen von Spritzern schützt. Der Hilfsbrenner wird vorzugsweise mit Gas und Druckluft betrieben. Bei Ausfall des Hilfsbrenners können sowohl der Ringspalt als auch die Gasdüse ersatzweise durch Druckluft freigehalten werden,

Erfindungsgemäß wird vorgesehen, dass während des Injektorbetriebs durch einen ersten Einlass der Injektorvorrichtung Luft anstelle von Erdgas eingebracht wird. Erdgas wird während des Brennerbetriebs durch den ersten Einlass eingebracht.

In einer vorteilhaften Ausgestaltung des Verfahrens wird vorgesehen, dass die Luft mit einem geringeren Volumenstrom als das Erdgas eingebracht wird.

Von Vorteil ist es, wenn der Volumenstrom der Luft etwa 85 % des Volumenstroms des Erdgases beträgt.

Ebenso erweist es sich als vorteilhaft, wenn während des Brennerbetriebs durch einen zweiten Einlass der Injektorvorrichtung Sauerstoff mit einem geringeren Volumenstrom als während des Injektorbetriebs eingebracht wird.

Vorzugsweise beträgt der Volumenstrom des Sauerstoffs während des Brennerbetriebs etwa 25 % oder weniger des Volumenstroms während des Injektorbetriebs.

Mit Vorteil wird vorgesehen, dass die Injektorvorrichtung vorwiegend zu Beginn eines Niederschmelzvorgangs einer in das Aggregat oder das Schmeizgefäß eingebrachten Charge Schrott als Brenner betrieben wird.

Ebenso ist es von Vorteil, wenn die Injektorvorrichtung während eines Zeitraums von etwa fünf bis zehn Minuten nach dem Einbringen der Charge Schrott in den Aggregat bzw das Schmelzgefäß als Brenner betrieben wird.

Vorteilhafte Weiterbildungen ergeben sich aus den Unteransprüchen, der Beschreibung und den Zeichnungen.

Nachstehend wird die Erfindung in einem Ausführungsbeispiel näher erläutert. Es zeigen:
- Fig. 1: eine an der Wandung eines metallurgischen Aggregats anbringbare Injektorvorrichtung mit einem Sauerstoffinjektor und einem Heißgasstutzen in der seitlichen Draufsicht und
- Fig. 2: die Injektorvorrichtung nach Figur 1 in einer weiteren, gegenüber der Darstellung in Figur 1 um 90° um die Längsachse des Heißgasstutzens gedrehten seitlichen Ansicht, teilweise im Längsschnitt.

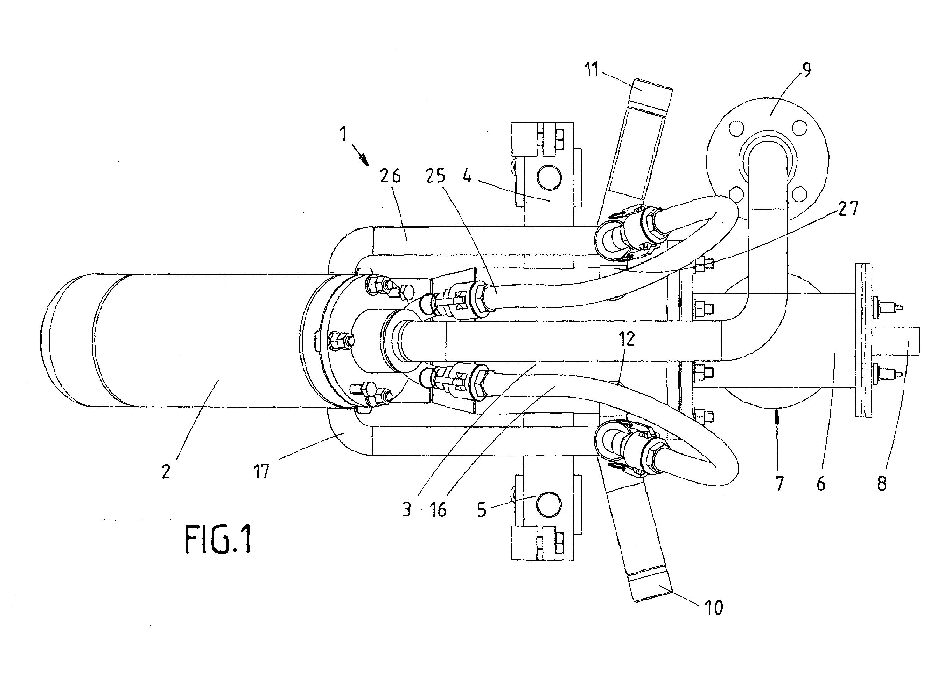

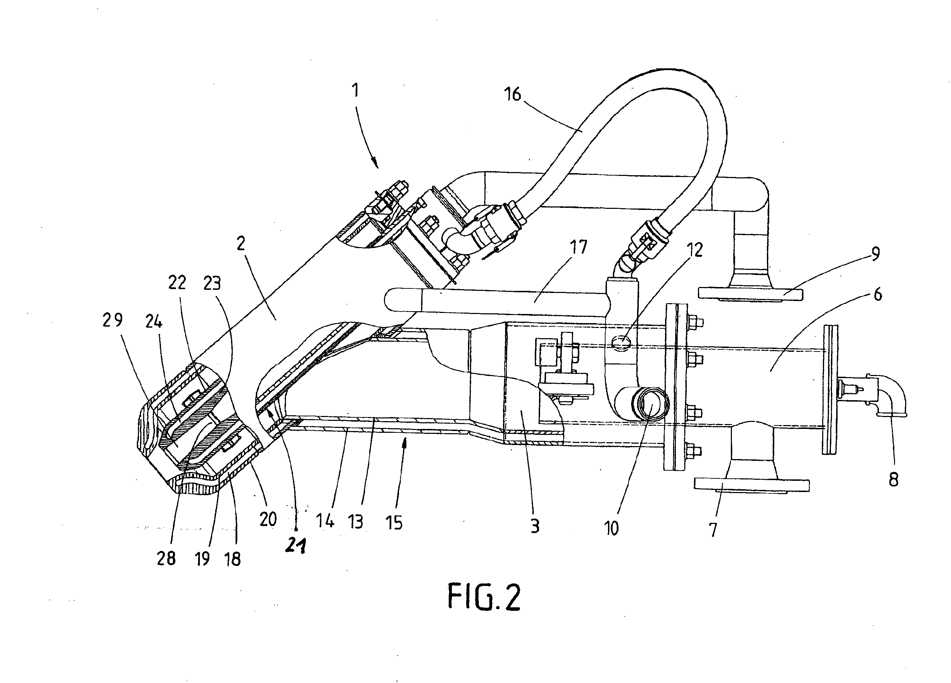

Eine Injektorvorrichtung 1 (Fig. 1, 2) umfasst einen Sauerstoffinjektor 2 und einen Heißgasstutzen 3. Dieser lässt sich über zwei an ihm befestigte, seitlich auskragende Laschen 4, 5 mit der Wandung des Aggregats verbinden. Dem Heißgasstutzen 3 wird über einen an einem einlassseitigen Flansch 6 angebrachten seitlichen Anschluss 7 im Injektorbetrieb Luft zugeführt. Beispielsweise wird die Luft in einem Volumenstrom von 300 Nm³/h zugeführt; im Brennerbetrieb wird über den Anschluss Erdgas mit einem Volumenstrom von 350 Nm³/h eingeführt. Ein am freien stirnseitigen Ende des Flansches 6 angebrachter Anschluss 8 dient zur Zuführung von Erdgas sowohl im Injektor- wie auch im Brennerbetrieb; die Erdgaszufuhr beträgt maximal 25 Nm³/h.

Dem Sauerstoffinjektor 2 wird im Injektorbetrieb über einen Anschluss 9 Sauerstoff mit einem Volumenstrom von 3000 Nm³/h zugeführt, im Brennerbetrieb mit einem Volumenstrom von 700 Nm³/h.

Der Sauerstoffinjektor 2 und der auch als Flammrohr bezeichnete Heißgasstutzen 3 sind mit einem gemeinsamen Kühlsystem zur Zuführung einer Kühlflüssigkeit ausgestattet. Dieses umfasst einen Anschluss 10 zur Zuleitung und einen Anschluss 11 zur Abführung des Kühlmittels. Von dem Anschluss 10 wird das Kühlmittel zu einem Anschluss 12 für die Kühlung einer Hülle 15 des Heißgasstutzens 3 sowie Anschlüssen 16, 17 des Sauerstoffinjektors 2 zugeführt. Die Hülle 15 wiederum umfasst eine äußere und eine innere Wandung 13, 14, die zueinander konzentrisch angeordnet sind. Der Sauerstoffinjektor 2 umfasst eine äußere gekühlte Hülle mit einem Hohlraum 18 mit zueinander konzentrischen Rohrwänden 19, 20. Der Sauerstoffinjektor 2 weist ferner eine zu der Hülle 15 konzentrische Innenhülle 21 auf, die ebenfalls aus zwei Wänden 22, 23 besteht, zwischen denen in einem Hohlraum 24 das Kühlmittel zirkuliert, das diesem über den Anschluss 16 zugeführt wird. Über Anschlüsse 25, 26 wird das Kühlmittel aus den Hohlräumen 18, 24 wieder herausgeführt und wie das aus dem Hohlraum der Hülle 15 des Heißgasstutzens 3 aus einem Anschluss 27 herausströmende Kühlmittel dem Anschluss 11 für die Ableitung die Kühlmittels zugeführt. Die Hohlräume 15, 18 und 24 sind jeweils so ausgestaltet, dass das Kühlmittel mäanderförmig durch sie hindurchlaufen muss. Die Anschlüsse 16, 25 umfassen biegsame Metallschläuche, die über Schnellkupplungen an entsprechende Stutzen an dem Sauerstoffinjektor 2 sowie an den Anschlüssen 10, 11 angeschlossen werden. Über ein mit einer Lavaldüse 28 ausgestattetes Innenrohr 29 wird durch den Sauerstoffinjektor 2 im Injektorbetrieb Sauerstoff zugeführt.

Die Injektorvorrichtung 1 wird überwiegend zu Beginn eines Niederschmelzvorgangs in dem Aggregat, insbesondere in einem Lichtbogenofen, als Brenner betrieben, d. h. während der ersten fünf bis zehn Minuten nach dem Chargieren eines neuen mit Schrott gefüllten und in den Ofen herabgelassenen Schrottkorbes. In dieser Phase wird das Ofengefäß nahezu vollständig mit Schrott gefüllt. Hierbei dient die Injektorvorrichtung 1 zur Unterstützung und Beschleunigung des Schmelzens durch den Lichtbogen.

Überwiegend zum Ende des Niederschmelzvorgangs hin wird dann in die Betriebsweise "Sauerstoffinjektor" gewechselt. In dieser Phase ist der Schrott weitgehend aufgeschmolzen. Das Ofengefäß enthält nur noch flüssiges Metall und Schlacke. In dieser Phase dient die Injektorvorrichtung 1 zur Entkohlung des Bades sowie in Verbindung mit gleichzeitig eingesetzten Kohleinjektoren zur Erzeugung einer sogenannten Schaumschlacke. Dabei können Kohlepartikel natürlich auch in aus der DE 102 01 108 A1 bekannter Weise dem Sauerstoffstrahl zugesetzt werden.

Auch wenn ein zweiter Korb mit Schrott chargiert wird, wird wieder für eine Dauer von fünf bis zehn Minuten in den Brennerbetrieb gewechselt. Darnach wird die Injektorvorrichtung 1 wieder in der Betriebsweise "Sauerstoffinjektor" eingesetzt.

### Bezugszeichenliste

- 1: Injektorvorrichtung
- 2: Sauerstoffinjektor
- 3: Heißgasstutzen
- 4: Lasche
- 5: Lasche
- 6: Flansch
- 7: Anschluss
- 8: Anschluss
- 9: Anschluss
- 10: Anschluss
- 11: Anschluss
- 12: Anschluss
- 13: Wandung
- 14: Wandung
- 15: Hülle
- 16: Anschluss
- 17: Anschluss
- 18: Hohlraum
- 19: Rohrwand
- 20: Rohrwand
- 21: Innenhülle
- 22: Wand
- 23: Wand
- 24: Hohlraum
- 25: Anschluss
- 26: Anschluss
- 27: Anschluss
- 28: Lavaldüse
- 29: Innenrohr

## Patentansprüche

1. Verfahren zur pytornetallurgischen Behandlung von Metallen, Metallschmelzen und/oder Schlacken In einem metallurgischen Aggregat oder Schmelzgefäß, insbesondere in einem Lichtbogenofen, zum Auf- oder Einblasen sauerstoffreicher Gase mit Hilfe einer Injektorvorrichtung (1), die in ihrer Betriebsweise als Injektor die sauerstoffhaltigen Gase beschleunigt und zu einem Hochgeschwindigkeitsstrahl mit einem diesen vollständig umhüllenden gasförmigen Mantel ausbildet,
**dadurch gekennzeichnet,**
**dass** die Injektorvorrichtung (1) alternativ von einem Brennerbetrieb auf einen Injektorbetrieb umschaltbar ist,
wobei während des Brennerbetriebs der Injektorvorrichtung (1) Erdgas und Sauerstoff zugeführt werden und während des Injektorbetriebes Sauerstoff, Erdgas und Heißluft, wobei durch einen ersten Einlass (7) der Injektorvorrichtung während des Injektorbetriebes Heißluft und während des Brennerbetriebes Erdgas zugeführt, der Sauerstoff durch einen zweiten Einlass (9) und Erdgas durch einen dritten Einlass (8) zugeführt werden und wobei der erste und der dritte Einlass in einen Ringspalt der Injektorvorrichtung (1) und der zweite Einlass (9) in eine zentrale Düse der Injektorvorrichtung (1) münden.

2. Verfahren nach Anspruch 1,
**dadurch gekennzeichnet,**
**dass** die Luft mit einem geringeren Volumenstrom als das Erdgas eingebracht wird.

3. Verfahren nach Anspruch 2,
**dadurch gekennzeichnet,**
**dass** der Volumenstrom der Luft 85 % des Volumenstroms des Erdgases beträgt.

4. Verfahren nach einem der Ansprüche 1 bis 3,
**dadurch gekennzeichnet,**
**dass** während des Brennerbetriebs durch einen zweiten Einlass (9) der Injektorvorrichtung Sauerstoff mit einem geringeren Volumenstrom als während des Injektorbetriebs eingebracht wird.

5. Verfahren nach Anspruch 4,
**dadurch gekennzeichnet,**
**dass** der Volumenstrom des Sauerstoffs während des Brennerbetriebs 25 % oder weniger des Volumenstroms während des Injektorbetriebs beträgt.

6. Verfahren nach einem der Ansprüche 1 bis 5,
**dadurch gekennzeichnet,**
**dass** sowohl während des Brennerbetriebs als auch während des Injektorbetriebs über einen dritten Einlass (8) Erdgas zugeführt wird.

7. Verfahren nach einem der Ansprüche 1 bis 6,
**dadurch gekennzeichnet,**
**dass** die Injektorvorrichtung (1) vorwiegend zu Beginn eines Niederschmelzvorgangs von in das Aggregat oder das Schmelzgefäß eingebrachtem Schrott als Brenner betrieben wird.

8. Verfahren nach Anspruch 7.
**dadurch gekennzeichnet,**
**dass** die Injektorvorrichtung (1) während eines Zeitraums von fünf bis zehn Minuten nach dem Einbringen der Charge Schrott in den Aggregat bzw. das Schmelzgefäß als Brenner betrieben wird.

## Claims

1. Method for pyrometallurgical treatment of metals, metal melts and/or slags in a metallurgical unit or smelting vessel, particularly in an arc furnace, for blowing on or injection of oxygen-rich gases with the help of an injector device (1), which in its mode of operation as injector accelerates the gases containing oxygen and forms a high-speed jet with a gaseous mantle completely shrouding this,
**characterised in that**
the injector device (1) is convertible in the alternative from a burner operation to an injector operation, wherein during burner operation of the injector device (1) natural gas and oxygen are fed and during injector operation oxygen, natural gas and hot air, wherein via a first inlet (7) of the injector device hot air is fed during injector operation and natural gas is fed during burner operation, the oxygen is fed via a second inlet (9) and natural gas via a third inlet (8), and wherein the first and the third inlets communicate with an annular gap of the injector device (1) and the second inlet (9) communicates with a central nozzle of the injector device (1).

2. Method according to claim 1, **characterised in that** the air is introduced at a lower volume flow than the natural gas.

3. Method according to claim 2, **characterised in that** the volume flow of the air is 85% of the volume flow of the natural gas.

4. Method according to any one of claims 1 to 3, **characterised in that** during burner operation oxygen is introduced via a second inlet (9) of the injector device at a lower volume flow than during the injector operation.

5. Method according to claim 4, **characterised in that** the volume flow of the oxygen during the burner operation is 25% or less than the volume flow during the injector operation.

6. Method according to any one of claims 1 to 5, **characterised in that** natural gas is fed via a third inlet (8) not only during burner operation, but also during injector operation.

7. Method according to any one of claims 1 to 6, **characterised in that** the injector device (1) is operated predominantly as a burner at the start of a melting-down process of scrap introduced into the unit or the smelting vessel.

8. Method according to claim 7, **characterised in that** the injector device (1) is operated as a burner during a time period of five to ten minutes after the introduction of the charged scrap into the unit or the smelting vessel.

## Revendications

1. Procédé pour le traitement pyrométallurgique de métaux, de métaux en fusion et/ou de scories dans une cuve de fusion ou un agrégat métallurgique, en particulier dans un four à arc électrique, pour le soufflage ou l'insufflation de gaz riches en oxygène à l'aide d'un dispositif d'injection (1) qui, dans son mode opératoire comme injecteur, accélère les gaz riches en oxygène et forme un faisceau à grande vitesse avec une enveloppe gazeuse qui l'entoure complètement, **caractérisé en ce que** le dispositif d'injection (1) peut passer par commutation en alternance d'un mode brûleur à un mode injecteur, dans lequel, dans le mode brûleur du dispositif d'injection (1), du gaz naturel et de l'oxygène sont acheminés et dans le mode injecteur, de l'oxygène, du gaz naturel et de l'air chaud sont acheminés, dans lequel, via une première entrée (7) du dispositif d'injection, de l'air chaud est acheminé dans le mode injecteur et du gaz naturel est acheminé dans le mode brûleur, de l'oxygène est acheminé via une deuxième entrée (9) et du gaz naturel est acheminé via une troisième entrée (8), et dans lequel la première et la troisième entrée débouchent dans une fente annulaire du dispositif d'injection (1) et la deuxième entrée (9) débouche dans une buse centrale du dispositif d'injection (1).

2. Procédé selon la revendication 1, **caractérisé en ce que** l'air est introduit avec un courant volumique inférieur à celui du gaz naturel.

3. Procédé selon la revendication 2, **caractérisé en ce que** le courant volumique de l'air représente 85 % du courant volumique du gaz naturel.

4. Procédé selon l'une quelconque des revendications 1 à 3, **caractérisé en ce que**, dans le mode brûleur, via une deuxième entrée (9) du dispositif d'injection, de l'oxygène est introduit avec un courant volumique inférieur à celui en vigueur dans le mode injecteur.

5. Procédé selon la revendication 4, **caractérisée en ce que** le courant volumique de l'oxygène, dans le mode brûleur, représente 25 % ou moins du courant volumique en vigueur dans le mode injecteur.

6. Procédé selon l'une quelconque des revendications 1 à 5, **caractérisé en ce qu'**on achemine du gaz naturel via une troisième entrée (8) aussi bien dans le mode brûleur que dans le mode injecteur.

7. Procédé selon l'une quelconque des revendications 1 à 6, **caractérisé en ce que** le dispositif d'injection (1) est mis en service à titre de brûleur principalement au début d'un processus de fusion de débris métalliques introduits dans l'agrégat ou dans la cuve de fusion.

8. Procédé selon la revendication 7, **caractérisé en ce que** le dispositif d'injection (1) est mis en service à titre de brûleur dans un laps de temps de 5 à 10 minutes après l'introduction des débris métalliques à titre de charge dans l'agrégat respectivement dans la cuve de fusion
